# EUROPEAN PATENT APPLICATION

(11) **EP 4 765 835 A1**
(43) Date of publication of application: **24.06.2026**
(21) Application number: 23953156.9
(22) Date of filing: 19.09.2023
(51) Int. Cl.: H04N 21/4363, H04N 21/436, H04N 21/45, H04N 21/81, H04N 21/485, H04W 8/00

(54) **DISPLAY DEVICE AND CONTROL METHOD OF DISPLAY DEVICE**

(71) Applicant: LG Electronics Inc., Yeongdeungpo-gu Seoul 07336 (KR)
(72) Inventor: SEO, Gwanhui, Seoul 06772 (KR)
(74) Representative: Schott, Jakob Valentin
(86) International application number: PCT/KR2023/014203
(87) International publication number: WO 2025/063331

(57) **Abstract**

Proposed is a movable display device for outputting video and audio, the movable display device may comprise: a transceiver which transmits data to and receives data from a mobile device by wire or wirelessly; a display which includes a touch screen and outputs video data or a user interface for a control command of audio data; a speaker which outputs the audio data; and a controller, wherein the controller receives a connection partner scan initiation request from a first mobile device, initiates a connection partner scan according to the received scan initiation request, and establishes a connection to a second mobile device in a first wireless communication manner according to the connection partner scan, and the connection partner scan initiation request is triggered by the second mobile device.

## Description

### TECHNICAL FIELD

The present disclosure relates to a display device and a control method of the display device.

### BACKGROUND

Recently, in multimedia devices such as a mobile phone and a television (TV), a new form-factor is being discussed. The form-factor refers to a structured form of a product.

The reason why form-factor innovation is emerging as important in a display industry is because of increasing needs of a user for the form-factor that may be used freely and conveniently regardless of a use situation departing from a typical form-factor customized for a specific use environment in the past, resulted from an increase in consumer mobility, convergence between devices, a rapid progress in smartization, and the like.

For example, vertical TVs are expanding, breaking the stereotype that the TVs are viewed horizontally. The vertical TV is a product that allows the user to change a direction of a screen by reflecting characteristics of the Millennials and Gen Z who are accustomed to enjoying content on mobile. The vertical TVs are convenient because a social media or a shopping site image may be viewed easily and comments may be read while watching videos at the same time. In particular, the advantages of the vertical TV are magnified more when the vertical TV is in association with a smartphone via a near-field communication (NFC)-based mirroring function. When watching regular TV programs or movies, the TV may be switched horizontally.

As another example, a rollable TV and a foldable smartphone are similar to each other in that they both use "flexible displays'. The flexible display literally means a flexible electronic device. To be flexible, the flexible display must first be thin. A substrate that receives information and converts the same into light must be thin and flexible so that a performance lasts for a long time without damage.

Being flexible means that the flexible display should not be greatly affected even when an impact is applied thereto. While the flexible display is bent or folded, a pressure is continuously applied to a junction. It is necessary to have excellent durability such that the inside is not damaged by such pressure, but also have a property of being easily deformed when the pressure is applied.

The flexible display is implemented based on an organic light-emitting diode (OLED), for example. The OLED is a display using an organic light emitting material. the organic material is relatively more flexible than an inorganic material such as a metal. Furthermore, the OLED has a thin substrate and thus is more competitive than other displays. In a case of an liquid crystal display (LCD) substrate used in the past, there is a limit to reducing a thickness because liquid crystal and glass are required separately.

Finally, as a new form-factor for the TV, a demand for a TV that may be easily moved indoors and outdoors is increasing. In particular, because of the recent corona virus epidemic, the time the users stay at home is increasing, and thus, a demand for a second TV is increasing. In addition, because of an increase in population going out for camping or the like, there is a demand for the TV of the new form-factor that may be easily carried and moved.

Such a TV with a new form factor may be used in an environment different from that of a conventional TV. As described above, the TV may be usable outdoors, and in such an environment, a control method capable of further satisfying user experience is required.

Such problems or backgrounds are not limited to TVs and may be applicable to most devices for outputting video or audio.

Accordingly, the following description is not limited to TVs and is applicable to all devices for outputting video or audio, and the term display device is used instead of the term TV.

### DISCLOSURE

### TECHNICAL PROBLEM

The present disclosure is intended to provide a display device capable of being connected to a mobile device in various environments and a control method of the display device in order to address the above-described problems.

More specifically, the present disclosure is intended to provide a display device capable of disconnecting a previously connected mobile device and connecting to a new mobile device and a control method of the display device.

In addition, the present disclosure is intended to provide a display device capable of providing a user convenience service after connection with a new mobile device and a control method of the display device.

The objectives to be achieved by the present disclosure are not limited to the above-described objectives, and other objectives not mentioned above will be clearly understood by a person having ordinary skill in the technical field to which the present disclosure belongs from the following description.

### TECHNICAL SOLUTION

A movable display device configured to output video and audio is provided. The movable display device includes: a transceiver configured to transmit and receive data with a mobile device through a wired or wireless connection; a display configured to output video data or provide a user interface for control commands of audio data, the display including a touch screen; a speaker configured to output the audio data; and a controller. The controller is configured to: receives a connection target scan start request from a first mobile device; initiate a connection target scan according to the received scan start request; and establish a connection with a second mobile device according to a first wireless communication scheme based on the connection target scan. The connection target scan start request may be triggered by the second mobile device.

A method for controlling a movable display device configured to output video and audio is provided. The method is performed by the movable display device including: a transceiver configured to transmit and receive data with a mobile device through a wired or wireless connection; a display configured to output video data or provide a user interface for control commands of audio data, the display including a touch screen; a speaker configured to output audio data; and a controller. The method includes: receiving a connection target scan start request from a first mobile device connected according to a first wireless communication scheme; initiating a connection target scan according to the received scan start request; and establishing a connection with a second mobile device according to the first wireless communication scheme based on the connection target scan. The connection target scan start request may be triggered by the second mobile device.

The solutions described above are merely some embodiments of the present disclosure. Various embodiments in which technical features of the present disclosure are reflected may be derived and understood by a person having ordinary skill in the art based on the detailed description of the present disclosure to be described below.

### ADVANTAGEOUS EFFECTS

The present disclosure provides the following effects.

The present disclosure may efficiently perform control of a display device through a mobile device.

In addition, the present disclosure may enhance user experience by performing control of a display device through a mobile device.

### BRIEF DESCRIPTION OF THE DRAWINGS

The accompanying drawings, which are included as a part of the detailed description to assist understanding of the present disclosure, provide embodiments of the present disclosure and describe the technical idea of the present disclosure together with the detailed description.
FIG. 1 is a block diagram for explaining respective components of a display device.
FIG. 2 2 is a diagram illustrating a display device according to an embodiment of the present disclosure.
FIG. 3 illustrates a connection relationship between a display device and a mobile device according to an embodiment of the present disclosure.
FIG. 4 is a flowchart illustrating connection establishment or disconnection between a display device and a mobile device according to an embodiment of the present disclosure.
FIG. 5 is a flowchart illustrating controlling a display device through a mobile device according to an embodiment of the present disclosure.
FIG. 6 is a flowchart illustrating controlling a display device through a mobile device according to an embodiment of the present disclosure.
FIG. 7 is a flowchart illustrating controlling a display device through a mobile device according to an embodiment of the present disclosure.
FIG. 8 is a flowchart illustrating controlling a display device through a mobile device according to an embodiment of the present disclosure.
FIG. 9 is a block diagram illustrating a mobile device according to an embodiment of the present disclosure.

### DETAILED DESCRIPTION

Hereinafter, the embodiments disclosed herein will be described in detail with reference to the accompanying drawings, but components that are the same as or similar to each other regardless of reference numerals will be given the same reference numerals, and redundant description thereof will be omitted. The suffixes "module" and "unit" for components used in the following description are given or used together in consideration of ease of writing the present document, and do not have meanings or roles that are distinct from each other by themselves. Further, in describing the embodiments disclosed herein, when it is determined that a detailed description of related known technologies may unnecessarily obscure the gist of the embodiments disclosed herein, detailed description thereof will be omitted. In addition, the attached drawings are provided for easy understanding of the embodiments disclosed herein and do not limit technical idea disclosed herein, and should be construed as including all modifications, equivalents, and alternatives falling within the spirit and scope of the present disclosure.

Although terms including ordinal numbers, such as first, second, and the like, may be used to describe various components, the components are not limited by the terms. The terms are only used to distinguish one component from another.

It should be understood that when a component is referred to as being "connected with" another component, the component may be directly connected with another component or an intervening component may also be present. In contrast, it should be understood that when a component is referred to as being "directly connected with" another component, there is no intervening component present.

A singular representation may include a plural representation unless it represents a definitely different meaning from the context.

The terms "includes" or "has" used herein should be understood as not precluding possibility of existence or addition of one or more other characteristics, figures, steps, operations, constituents, components, or combinations thereof.

In the following descriptions, the term "display device" will be used. However, the term "display device" may refer to various devices such as TVs, multimedia devices, and so on, and thus, the scope of the present disclosure is not limited to specific terminology.

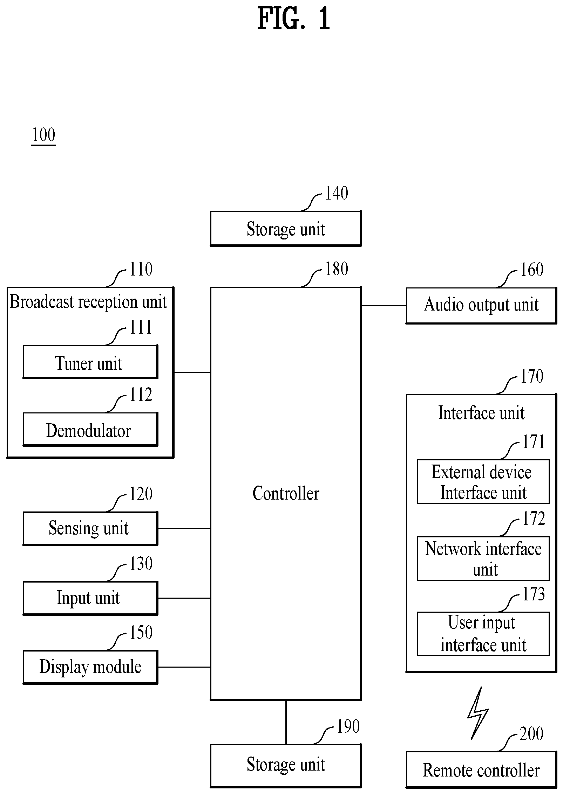

FIG. 1 is a block diagram for illustrating each component of a display device 100 according to an embodiment of the present disclosure.

The display device 100 may include a broadcast receiver 1210, an external device interface 171, a network interface 172, storage 140, a user input interface 173, an input unit 130, and a controller 180, a display module 150, an audio output unit 160, and/or a power supply 190.

The broadcast receiver 1210 may include a tuner 1211 and a demodulator 1212.

Unlike the drawing, the display device 100 may include only the external device interface 171 and the network interface 172 among the broadcast receiver 1210, the external device interface 171, and the network interface 172. That is, the display device 100 may not include the broadcast receiver 1210.

The tuner 1211 may select a broadcast signal corresponding to a channel selected by the user or all pre-stored channels among broadcast signals received via an antenna (not shown) or a cable (not shown). The tuner 1211 may convert the selected broadcast signal into an intermediate-frequency signal or a base band image or audio signal.

For example, when the selected broadcast signal is a digital broadcast signal, the tuner 1211 may convert the digital broadcast signal into a digital IF signal (DIF), and when the selected broadcast signal is an analog broadcast signal, the tuner 1211 may convert the analog broadcast signal into an analog base band image or audio signal (CVBS/SIF). That is, the tuner 1211 may process the digital broadcast signal or the analog broadcast signal. The analog base band image or audio signal (CVBS/SIF) output from the tuner 1211 may be directly input to the controller 180.

In one example, the tuner 1211 may sequentially select broadcast signals of all stored broadcast channels via a channel memory function among the received broadcast signals, and convert the selected signals into the intermediate-frequency signal or the base band image or audio signal.

In one example, the tuner 1211 may include a plurality of tuners to receive broadcast signals of a plurality of channels. Alternatively, the tuner 1211 may be a single tuner that simultaneously receives the broadcast signals of the plurality of channels.

The demodulator 1212 may receive the digital IF signal (DIF) converted by the tuner 1211 and perform a demodulation operation. The demodulator 1212 may output a stream signal (TS) after performing demodulation and channel decoding. In this regard, the stream signal may be a signal in which an image signal, an audio signal, or a data signal is multiplexed.

The stream signal output from the demodulator 1212 may be input to the controller 180. The controller 180 may output an image via the display module 150 and output an audio via the audio output unit 160 after performing demultiplexing, image/audio signal processing, and the like.

A sensing unit 120 refers to a device that senses a change in the display device 100 or an external change. For example, the sensing unit 120 may include at least one of a proximity sensor, an illumination sensor, a touch sensor, an infrared (IR) sensor, an ultrasonic sensor, an optical sensor (e.g., a camera), a voice sensor (e.g., a microphone), a battery gauge, and an environment sensor (e.g., a hygrometer, a thermometer, and the like).

The controller 180 may check a state of the display device 100 based on information collected by the sensing unit 120, and when a problem occurs, the controller 180 may notify the user of the problem or may make adjustments on its own to control the display device 100 to maintain the best state.

In addition, a content, an image quality, a size, and the like of the image provided by the display module 150 may be controlled differently based on a viewer sensed by the sensing unit, a surrounding illumination, or the like to provide an optimal viewing environment. As a smart TV progresses, the number of functions of the display device increases and the number of sensing units 20 also increases together.

The input unit 130 may be disposed at one side of a main body of the display device 100. For example, the input unit 130 may include a touch pad, a physical button, and the like. The input unit 130 may receive various user commands related to an operation of the display device 100 and transmit a control signal corresponding to the input command to the controller 180.

Recently, as a size of a bezel of the display device 100 decreases, the number of display devices 100 in a form in which the input unit 130 in a form of a physical button exposed to the outside is minimized is increasing. Instead, the minimized physical button may be located on a rear surface or a side surface of the display device 100, and a user input may be received from a remote control device 200 via the touch pad or the user input interface 173 to be described later.

The storage 140 may store programs for processing and controlling each signal in the controller 180, or may store signal-processed image, audio, or data signals. For example, the storage 140 may store application programs designed for the purpose of performing various tasks processable by the controller 180, and may selectively provide some of the stored application programs upon request from the controller 180.

The programs stored in the storage 140 are not particularly limited as long as they may be executed by the controller 180. The storage 140 may also perform a function for temporarily storing the image, audio, or data signals received from an external device via the external device interface 171. The storage 140 may store information on a predetermined broadcast channel via the channel memory function such as a channel map.

FIG. 1 shows an embodiment in which the storage 140 is disposed separately from the controller 180, but the scope of the present disclosure is not limited thereto, and the storage 140 is able to be included in the controller 180.

The storage 140 may include at least one of a volatile memory (e.g., a DRAM, a SRAM, a SDRAM, and the like) or a non-volatile memory (e.g., a flash memory, a hard disk drive (HDD), a solid-state drive (SSD), and the like).

The display module 150 may generate a driving signal by converting the image signal, the data signal, an OSD signal, and a control signal processed by the controller 180 or the image signal, the data signal, a control signal, and the like received from the interface 171. The display module 150 may include the display panel 11 having the plurality of pixels.

The plurality of pixels disposed on the display panel may include RGB sub-pixels. Alternatively, the plurality of pixels disposed on the display panel may include RGBW sub-pixels. The display module 150 may generate driving signals for the plurality of pixels by converting the image signal, the data signal, the OSD signal, the control signal, and the like processed by the controller 180.

The display module 150 may be a plasma display panel (PDP), a liquid crystal display (LCD), an organic light emitting diode (OLED), a flexible display module, and the like, or may be a three-dimensional (3D) display module. The 3D display module 150 may be classified into a non-glasses type and a glasses type.

The display device 100 includes the display module that occupies most of the front surface thereof and a casing that covers a rear surface, a side surface, and the like of the display module and packages the display module.

Recently, the display device 100 may use the display module 150 that may be bent such as the light emitting diode (LED) or the organic light emitting diode (OLED) to realize a curved screen in addition to a flat screen.

The LCD, which was mainly used in the past, received light via a backlight unit because it was difficult for the LCD to emit light on its own. The backlight unit is a device that uniformly supplies light supplied from a light source to a liquid crystal located in the front. As the backlight unit became thinner, it was possible to realize a thin LCD, but it was difficult to implement the backlight unit with a flexible material, and when the backlight unit is bent, it was difficult to uniformly supply the light to the liquid crystal, resulting in a change in brightness of the screen.

On the other hand, the LED or the OLED may be implemented to be bendable because each element constituting the pixel emits light on its own and thus the backlight unit is not used. In addition, because each element emits light on its own, even when a positional relationship with a neighboring element changes, brightness thereof is not affected, so that the display module 150 that is bendable using the LED or the OLED may be implemented.

The organic light emitting diode (OLED) panel appeared in earnest in mid-2010 and is rapidly replacing the LCD in a small and medium-sized display market. The OLED is a display made using a self-luminous phenomenon of emitting light when current flows through a fluorescent organic compound. The OLED has a higher image quality response speed than the LCD, so that there is almost no afterimage when realizing a moving image.

The OLED is a light-emitting display product that uses three types (red, green, and blue) of phosphor organic compounds having a self-luminous function, and uses a phenomenon in which electrons and positively charged particles injected from a cathode and an anode are combined with each other within an organic material to emit light by itself, so that there is no need for a backlight (a backlight device) that deteriorates color.

The light emitting diode (LED) panel, as a technology that uses one LED element as one pixel, may reduce a size of the LED element compared to the prior art, and thus, may implement the display module 150 that is bendable. A device referred to as an LED TV in the past only used the LED as the light source for the backlight unit that supplies the light to the LCD, and the LED itself was not able to constitute the screen.

The display module includes the display panel, and a coupling magnet, a first power supply, and a first signal module positioned on a rear surface of the display panel. The display panel may include a plurality of pixels R, G, and B. The plurality of pixels R, G, and B may be formed in respective areas where multiple data lines and multiple gate lines intersect each other. The plurality of pixels R, G, and B may be disposed or arranged in a matrix form.

For example, the plurality of pixels R, G, and B may include a red (hereinafter, 'R') sub-pixel, a green ('G') sub-pixel, and a blue ('B') sub-pixel. The plurality of pixels R, G, and B may further include a white (hereinafter, 'W') sub-pixel.

In the display module 150, a side on which the image is displayed may be referred to as a front side or a front surface. When the display module 150 displays the image, a side on which the image is not able to be observed may be referred to as a rear side or a rear surface.

In one example, the display module 150 may be constructed as the touch screen and may be used as the input device in addition to the output device.

The audio output unit 160 receives an audio-processed signal from the controller 180 and outputs the received signal as the audio.

An interface 170 serves as a passage for various types of external devices connected to the display device 100. The interface may be in a wireless scheme using the antenna as well as a wired scheme of transmitting and receiving data via the cable.

The interface 170 may include at least one of a wired/wireless headset port, an external charger port, a wired/wireless data port, a memory card port, a port for connecting a device having an identification module, an audio input/output (I/O) port, a video input/output (I/O) port, and an earphone port.

An example of the wireless scheme may include the broadcast receiver 1210 described above, and may include not only the broadcast signal, but also a mobile communication signal, a short-distance communication signal, a wireless Internet signal, and the like.

The external device interface 171 may transmit or receive data with a connected external device. To this end, the external device interface 171 may include an A/V input/output unit (not shown).

The external device interface 171 may be connected to the external device such as a digital versatile disk (DVD), a Blu-ray, a game console, a camera, a camcorder, a computer (a laptop), a set-top box, and the like in a wired/wireless manner, and may perform input/output operations with the external device.

In addition, the external device interface 171 may establish a communication network with various remote control devices 200 to receive a control signal related to the operation of the display device 100 from the remote control device 200 or to transmit data related to the operation of the display device 100 to the remote control device 200.

The external device interface 171 may include a wireless communication unit (not shown) for short-range wireless communication with other electronic devices. With such a wireless communication unit (not shown), the external device interface 171 may exchange data with an adjacent mobile terminal. In particular, the external device interface 171 may receive device information, running application information, an application image, and the like from the mobile terminal in a mirroring mode.

The network interface 172 may provide an interface for connecting the display device 100 to a wired/wireless network including an Internet network. For example, the network interface 172 may receive content or data provided by the Internet, a content provider, or a network operator via the network. In one example, the network interface 172 may include a communication module (not shown) for connection to the wired/wireless network.

The external device interface 171 and/or the network interface 172 may include a communication module for the short-range communication such as a wireless fidelity (Wi-Fi), a Bluetooth, a Bluetooth low energy (BLE), a Zigbee, and a near field communication (NFC), a communication module for cellular communication such as a long-term evolution (LTE), an LTE advance (LTE-A), a code division multiple access (CDMA), a wideband CDMA (WCDMA), a universal mobile telecommunications system (UMTS), and a wireless broadband (WiBro), and the like.

The user input interface 173 may transmit a signal input by the user to the controller 180 or transmit a signal from the controller 180 to the user. For example, a user input signal such as power ON/OFF, channel selection, screen setting, and the like may be transmitted/received to/from the remote control device 200, a user input signal input from a local key (not shown) such as a power key, a channel key, a volume key, a setting value, and the like may be transmitted to the controller 180, a user input signal input from a sensor unit (not shown) that senses a gesture of the user may be transmitted to the controller 180, or a signal from the controller 180 may be transmitted to the sensor unit.

The controller 180 may include at least one processor, and may control overall operations of the display device 100 using the processor included therein. In this regard, the processor may be a general processor such as a central processing unit (CPU). In one example, the processor may be a dedicated device such as an ASIC or a processor based on other hardware.

The controller 180 may demultiplex the stream input via the tuner 1211, the demodulator 1212, the external device interface 171, or the network interface 172, or process a demultiplexed signal to generate or output a signal for image or audio output.

The image signal image-processed by the controller 180 may be input to the display module 150 and displayed as an image corresponding to the corresponding image signal. In addition, the image signal image-processed by the controller 180 may be input to an external output device via the external device interface 171.

The audio signal processed by the controller 180 may be output as the audio via the audio output unit 160. In addition, the audio signal processed by the controller 180 may be input to the external output device via the external device interface 171. In addition, the controller 180 may include a demultiplexer, an image processor, and the like.

In addition, the controller 180 may control overall operations within the display device 100. For example, the controller 180 may control the tuner 1211 to select (tune) a broadcast corresponding to the channel selected by the user or the pre-stored channel.

In addition, the controller 180 may control the display device 100 in response to a user command input via the user input interface 173 or by an internal program. In one example, the controller 180 may control the display module 150 to display the image. In this regard, the image displayed on the display module 150 may be a still image or a moving image, and may be a 2D image or a 3D image.

In one example, the controller 180 may allow a predetermined 2D object to be displayed within the image displayed on the display module 150. For example, the object may be at least one of a connected web screen (a newspaper, a magazine, and the like), an electronic program guide (EPG), various menus, a widget, an icon, the still image, the moving image, and a text.

In one example, the controller 180 may modulate and/or demodulate a signal using an amplitude shift keying (ASK) scheme. Here, the amplitude shift keying (ASK) scheme may refer to a scheme of modulating the signal by varying an amplitude of a carrier wave based on a data value or restoring an analog signal to a digital data value based on to the amplitude of the carrier wave.

For example, the controller 180 may modulate the image signal using the amplitude shift keying (ASK) scheme and transmit the modulated image signal via a wireless communication module.

For example, the controller 180 may demodulate and process the image signal received via the wireless communication module using the amplitude shift keying (ASK) scheme.

Therefore, the display device 100 may easily transmit and receive a signal with another image display device disposed adjacent thereto without using a unique identifier such as a media access control address (MAC address) or a complex communication protocol such as TCP/IP.

In one example, the display device 100 may further include a photographing unit (not shown). The photographing unit may photograph the user. The photographing unit may be implemented with one camera, but may not be limited thereto, and may be implemented with a plurality of cameras. In one example, the photographing unit may be embedded in the display device 100 or disposed separately upwardly of the display module 150. Information on the image photographed by the photographing unit may be input to the controller 180.

The controller 180 may recognize a location of the user based on the image photographed by the photographing unit. For example, the controller 180 may identify a distance between the user and the display device 100 (a z-axis coordinate). In addition, the controller 180 may determine an x-axis coordinate and a y-axis coordinate within the display module 150 corresponding to the location of the user.

The controller 180 may sense the gesture of the user based on the image photographed by the photographing unit or the signal sensed by the sensor unit, or a combination thereof.

The power supply 190 may supply the corresponding power throughout the display device 100. In particular, the power may be supplied to the controller 180 that may be implemented in a form of a system on chip (SOC), the display module 150 for displaying the image, the audio output unit 160 for outputting the audio, and the like.

Specifically, the power supply 190 may include a converter (not shown) that converts AC power to DC power and a Dc/Dc converter (not shown) that converts a level of the DC power.

In one example, the power supply 190 serves to receive the power from the outside and distribute the power to each component. The power supply 190 may use a scheme of supplying the AC power in direct connection to an external power source, and may include a power supply 190 that may be charged and used by including a battery.

In a case of the former, the power supply is used in connection with the cable, and has difficulties in moving or is limited in a movement range. In a case of the latter, the movement is free, but a weight and a volume of the power supply increase as much as those of the battery, and the power supply must be directly connected to a power cable for a certain period of time for charging or coupled to a charging cradle (not shown) that supplies the power.

The charging cradle may be connected to the display device via a terminal exposed to the outside, or the built-in battery may be charged using a wireless scheme when approaching the charging cradle.

The remote control device 200 may transmit the user input to the user input interface 173. To this end, the remote control device 200 may use the Bluetooth, a radio frequency (RF) communication, an infrared radiation (IR) communication, an ultra-wideband (UWB), the ZigBee, or the like. In addition, the remote control device 200 may receive the image, audio, or data signal output from the user input interface 173 and display the same thereon or output the same as audio.

In one example, the display device 100 described above may be a fixed or mobile digital broadcast receiver that may receive a digital broadcast.

The block diagram of the display device 100 shown in FIG. 1 is only a block diagram for one embodiment of the present disclosure, and each component of the block diagram is able to be integrated, added, or omitted based on specifications of the display device 100 that is actually implemented.

That is, when necessary, two or more components may be combined to each other into one component, or one component may be subdivided into two or more components. In addition, functions performed in each block are for illustrating the embodiment of the present disclosure, and a specific operation or a device thereof does not limit the scope of rights of the present disclosure.

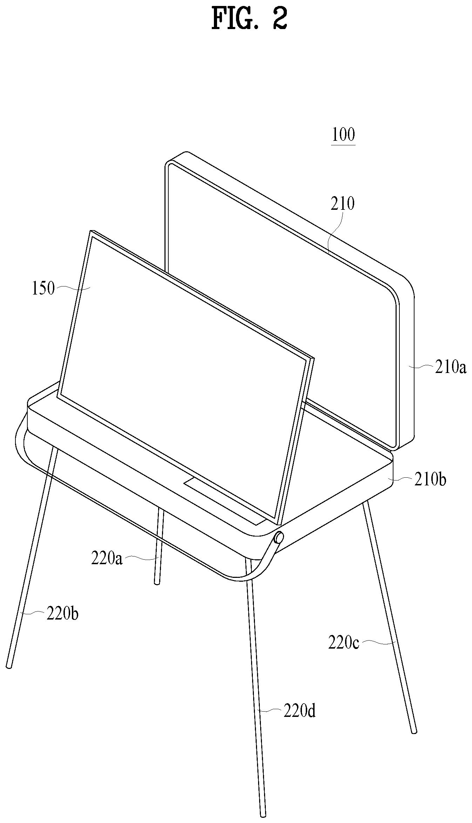

FIG. 2 is a diagram showing a display device according to an embodiment of the present disclosure. Hereinafter, redundant descriptions duplicate with the above descriptions will be omitted.

Referring to FIG. 2, the display device 100 has the display module 150 accommodated inside a housing 210. In this regard, the housing 210 may include an upper casing 210a and a lower casing 210b, and the upper casing 210a and the lower casing 210b may have a structure of being opened and closed.

In one embodiment, the audio output unit 160 may be included in the upper casing 210a of the display device 100, and the main board that is the controller 180, a power board, the power supply 190, the battery, the interface 170, the sensing unit 120, and the input unit (including the local key) 130 may be accommodated in the lower casing 210b. In this regard, the interface 170 may include a Wi-Fi module, a Bluetooth module, an NFC module, and the like for the communication with the external device, and the sensing unit 120 may include an illuminance sensor and an IR sensor.

In one embodiment, the display module 150 may include a DC-DC board, a sensor, and a low voltage differential signaling (LVDS) conversion board.

In addition, in one embodiment, the display device 100 may further include four detachable legs 220a, 220b, 220c, and 220d. In this regard, the four legs 220a, 220b, 220c, and 220d may be attached to the lower casing 210b to space the display device 100 from the floor.

The display device according to FIG. 2 has a movable feature.

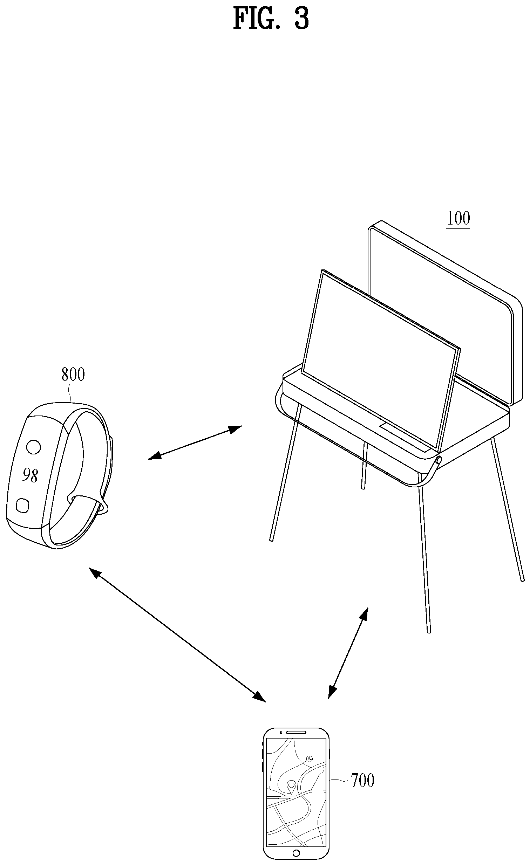

FIG. 3 illustrates a connection relationship between a display device and a mobile device according to an embodiment of the present disclosure.

The display device 100 is connected to a first mobile device 700 through wireless communication. Preferably, the display device 100 and the first mobile device 700 may be connected through Wireless Fidelity (Wi-Fi). The first mobile device 700 may be a device such as a smartphone.

A second mobile device 800 is connected to the first mobile device 700 through wireless communication. Preferably, the second mobile device 800 and the first mobile device 700 may be connected through Bluetooth or Bluetooth Low Energy (BLE). The second mobile device 800 may be a device such as a smart band.

The second mobile device 800 may disconnect from the first mobile device 700 and establish a connection with the display device 100 (indicated by a dotted line).

Such a need for disconnection and connection establishment is required because, in an outdoor environment such as a campsite, carrying the first mobile device 700 such as a smartphone while performing activities is inconvenient for a user and may provide a cause of damage or loss of the first mobile device 700.

In addition, in an outdoor environment such as a campsite, the conventional remote control device 200 used as an input device for the display device 100 may not be suitable.

Accordingly, a method for connecting the second mobile device 800 such as a smart band to the display device 100 as an input device for controlling the display device 100 is required. In addition, after such connection, a procedure or method for controlling the display device 100 through the second mobile device 800 is also required.

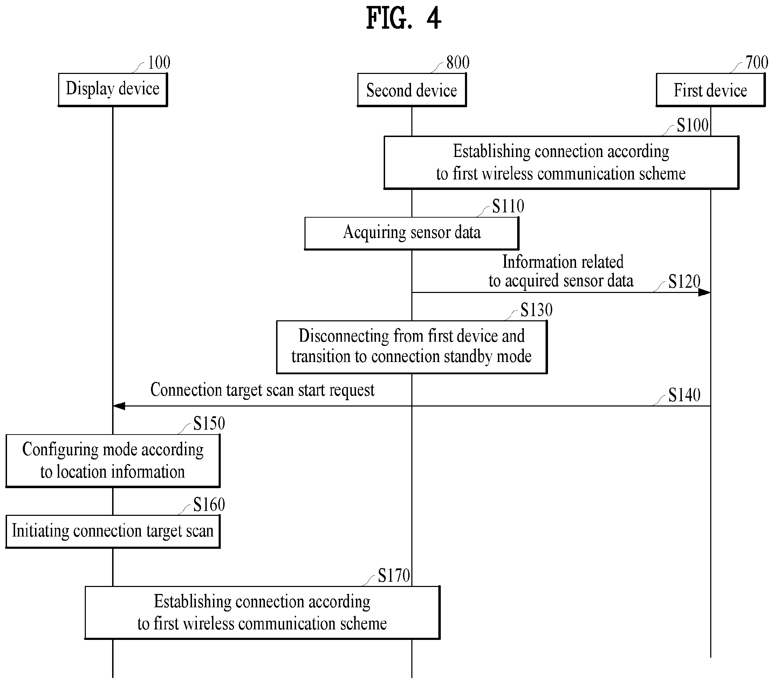

FIG. 4 is a flowchart illustrating connection establishment or disconnection between a display device and mobile devices according to an embodiment of the present disclosure. In FIG. 4, description is provided from the perspective of the display device 100 and is described as being performed by the display device 100. However, for portions in which the display device 100 does not directly intervene, description is provided from the perspective of the mobile devices 700 and 800.

The display device 100 includes a transceiver 172 configured to transmit and receive data with a mobile device through a wired or wireless connection; a display 150 configured to provide a user interface for control commands of audio data and output video data, the display 150 including a touch screen; a speaker 160 configured to output the audio data; and a controller 180.

The display device 100 and the first mobile device 700 are in a state in which a connection is established through wireless communication, as described with reference to FIG. 3.

In addition, it is assumed that the first mobile device 700 and the second mobile device 800 have established a connection according to a first wireless communication scheme (S100).

The second mobile device 800 acquires sensor data (S110). Here, the second mobile device 800 includes a specific sensor and acquires sensor data through the sensor. Preferably, the second mobile device 800 includes an electromyography (EMG) sensor and acquires EMG sensor data.

The second mobile device 800 transmits information related to the acquired sensor data to the first mobile device 700 (S120).

Transmission of the sensor data to the first mobile device 700 causes the second mobile device 800 to disconnect from the first mobile device 700 according to the first wireless communication scheme and transmit, to the display device 100, a request for establishing a connection according to the first wireless communication scheme.

After transmitting the information related to the acquired sensor data, the second mobile device 800 disconnects from the first mobile device 700 and transitions to a connection standby mode according to the first wireless communication scheme (S130).

The first mobile device 700, which has received the sensor data from the second mobile device 800, transmits a connection target scan start request to the display device 100 (S140). The connection target scan start request is for initiating an operation to search for a target device to be connected according to the first wireless communication scheme and establish a connection. In addition, generation and transmission of the connection target scan start request are triggered by the second mobile device 800.

However, a temporal order of S130 and S140 may be different from that illustrated in FIG. 4. That is, S140 may be performed first, and S130 may be performed thereafter.

The display device 100 acquires location information and may configure an operation mode based on the location information (for example, a "home mode" or an "outdoor mode") (S150). The location information may be information received from the first mobile device 700. The "outdoor mode" may be configured when a location is identified as being other than a building based on at least the location information.

In addition, the display device 100 receives the connection target scan start request and initiates a connection target scan (S160).

S150 and S160 may be performed regardless of order. That is, S150 may be performed and then S160 may be performed as illustrated, but S160 may be performed and then S150 may be performed.

Thereafter, the display device 100 may establish a connection with the second mobile device 800 according to the first wireless communication scheme (S170).

In S110, S120, S130, and S140 described above, the sensor data is required to correspond to a predefined value for each operation to be performed. That is, only when sensor data corresponding to a predefined value is acquired in S110, transmission and reception of sensor data in S120 are performed. In addition, only when transmission and reception of predefined sensor data are performed in S120, operations of S130 and S140 are performed.

As a more specific embodiment, the first mobile device 700 may be a smartphone, and the second mobile device 800 may be a smart band. The smartphone 700 and the smart band 800 may be connected to each other through Bluetooth (S100). In such a state, a user of the smart band (that is, a user wearing the smart band) performs a motion operation (for example, an operation of clenching a fist three times) in order to establish a direct connection with the display device 100, thereby causing the smart band 800 to acquire sensor data (S110). The acquired sensor data is transmitted to the smartphone 700, and such transmission causes transmission of a connection target scan start request from the smartphone 700 to the display device 100 (S140). In addition, the smart band 800 may disconnect from the smartphone 700 according to the first wireless communication scheme and transition to the connection standby mode. The display device 100 initiates the connection target scan according to the connection target scan start request (S160) and performs configuration of a mode according to the location information. As a result, the display device 100 may establish a connection with the smart band 800 according to the first wireless communication scheme (S170).

The display device 100 and the first mobile device 700 continuously maintain a connection through wireless communication other than the first wireless communication scheme.

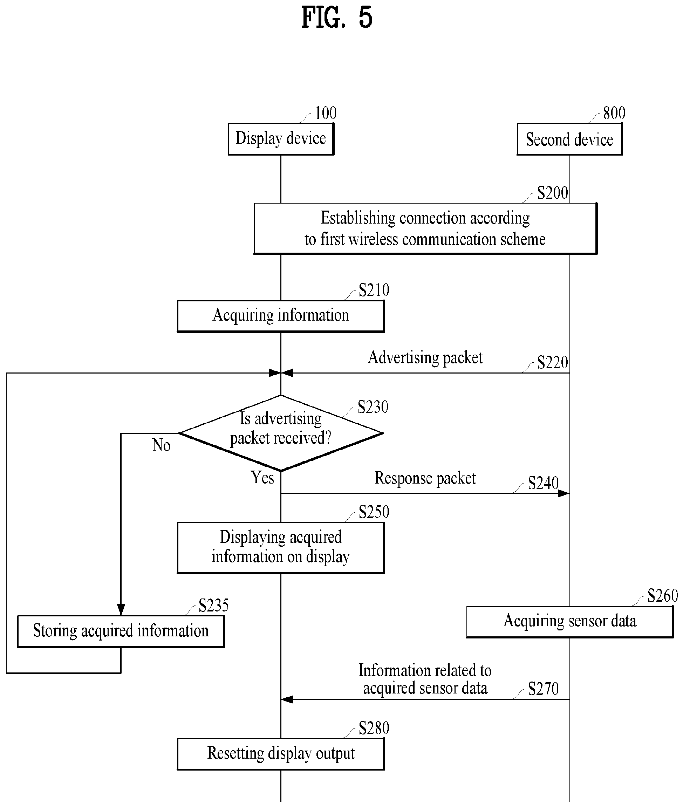

FIG. 5 is a flowchart illustrating controlling a display device through a mobile device according to an embodiment of the present disclosure. The flowchart of FIG. 5 is assumed to be performed after completion of the procedure illustrated in FIG. 4. However, the procedure illustrated in FIG. 4 is not necessarily required to be performed in advance. In addition, the flowchart of FIG. 5 may be a procedure that is activated when the mode configured in S150 of FIG. 4 is a predetermined mode (for example, an "outdoor mode"). However, the procedure may also be activated even when the operation mode of the display device 100 according to the location information is not the predetermined mode.

The display device 100 may establish a connection with the second mobile device 800 according to the first wireless communication scheme (S200).

The display device 100 acquires information (S210). There is no limitation on the information to be acquired. However, the information may be, for example, time-based weather information of a region in which the display device 100 is located. The location information may be acquired directly by the display device 100 or may be received from the first mobile device 700 as described above. Acquisition of the information may be performed periodically, and the display device 100 may store the acquired information in a storage such as a memory.

The second mobile device 800 may transmit an advertising packet to the display device 100 (S220). The advertising packet may be transmitted periodically.

The display device 100 may attempt to receive an advertising packet from the second mobile device 800 (S230). The advertising packet is transmitted through a predefined signal. In addition, the display device 100 measures a received signal strength of the advertising packet and may measure a distance to the second mobile device 800 according to the measured signal strength.

Regarding whether the advertising packet is received, when the received signal strength of the advertising packet is greater than a predetermined reference value, it may be determined that the advertising packet is received. Similarly, when the received signal strength of the advertising packet is less than or equal to the predetermined reference value, it may be determined that the advertising packet is not received.

When it is determined that the advertising packet is not received, the display device 100 stores the acquired information in a storage such as a memory (S235) and may wait until the advertising packet is received.

When it is determined that the advertising packet is received, the display device 100 may transmit a response packet to the second mobile device 800 (S240).

As the advertising packet is received, the display device 100 may display the acquired information on the display 150 (S250). When the acquired information includes audio information, the display device 100 may also output the audio information through the speaker 160. As a result, the display device 100 outputs the acquired information through the display 150 or the speaker 160 based on transmission and reception of the advertising packet by the second mobile device 800 (S220, S230).

As another embodiment, the acquired information may be configured to be output only when a predetermined condition is satisfied. For example, when the acquired information is time-based weather information of a region in which the display device 100 is located, the display device 100 may display the acquired information on the display 150 only when a forecast such as rain, snow, a high-temperature phenomenon, or a low-temperature phenomenon is present.

S240 and S250 may be performed in an order different from that illustrated. That is, S250 may be performed first, and S240 may be performed thereafter.

The second mobile device 800 acquires sensor data (S260). When the second mobile device 800 receives the response packet from the display device 100 (S240), the second mobile device 800 may notify a user of the second mobile device 800 of reception of the response packet through a human-machine interface (HMI) of the second mobile device 800. As an example of the HMI, haptic vibration, a video alarm, or an audio alarm may be used. Through such notification, the user may perform a motion operation that serves as a basis for the sensor data, and the second mobile device 800 may acquire the sensor data.

Thereafter, the second mobile device 800 transmits information related to the acquired sensor data to the display device 100 (S270).

The display device 100, which has received the information related to the acquired sensor data, may reset or initialize output of the display 150 (S280). The operation includes removing the information displayed on the display 150 in S250. For example, when the acquired information is displayed through a pop-up window, the operation includes controlling the display 150 such that the pop-up window disappears.

That is, S260 to S280 may be understood as a control procedure for allowing the user of the second mobile device to check information displayed on the display 150 of the display device 100 and reset or initialize the output of the display 150.

To prevent the acquired information from being further displayed on the display 150 of the display device 100, a motion operation (for example, an operation of waving a hand left and right twice) is performed, and the second mobile device 800 acquires the sensor data (S260). The acquired sensor data is transmitted to the display device 100, and such transmission causes the display device 100 to control the display 150.

As described above, the second mobile device 800 may operate as an input device for controlling the display device 100.

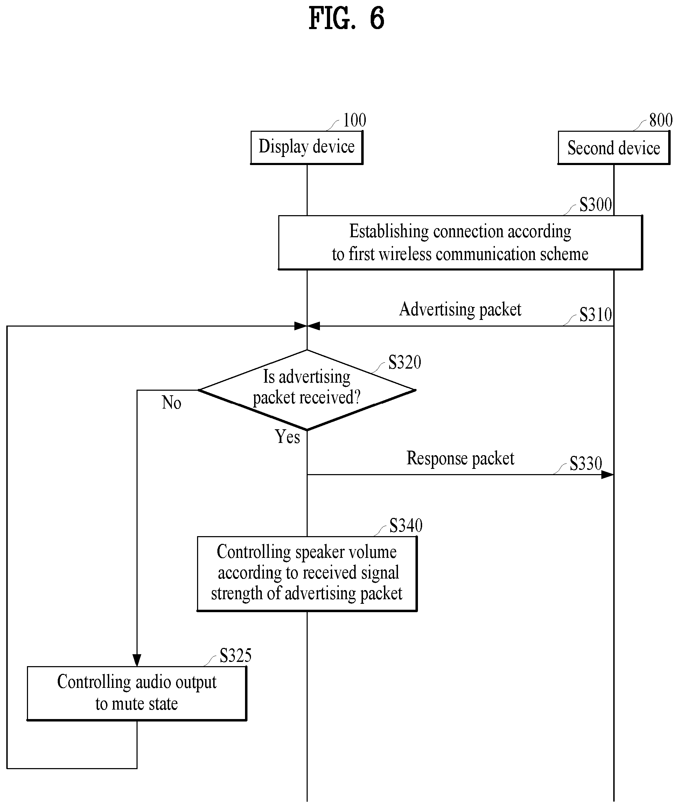

FIG. 6 is a flowchart illustrating controlling a display device through a mobile device according to an embodiment of the present disclosure.

The flowchart of FIG. 6 is assumed to be performed after completion of the procedure illustrated in FIG. 4. However, the procedure illustrated in FIG. 4 is not necessarily required to be performed in advance. In addition, the flowchart of FIG. 6 may be a procedure that is activated when the mode configured in S150 of FIG. 4 is a predetermined mode (for example, an "outdoor mode"). However, the procedure may also be activated even when the operation mode of the display device 100 according to the location information is not the predetermined mode.

The display device 100 may establish a connection with the second mobile device 800 according to the first wireless communication scheme (S300).

The second mobile device 800 may transmit an advertising packet to the display device 100 (S310). The advertising packet may be transmitted periodically.

The display device 100 may attempt to receive the advertising packet from the second mobile device 800 (S320). The advertising packet is transmitted through a predefined signal. In addition, the display device 100 measures a received signal strength of the advertising packet and may measure a distance to the second mobile device 800 according to the measured signal strength.

Regarding whether the advertising packet is received, when the received signal strength of the advertising packet is greater than a predetermined reference value, it may be determined that the advertising packet is received. Similarly, when the received signal strength of the advertising packet is less than or equal to the predetermined reference value, it may be determined that the advertising packet is not received.

When it is determined that the advertising packet is not received, the display device 100 may control audio output through the speaker 160 to a mute state (S325).

When it is determined that the advertising packet is received, the display device 100 may transmit a response packet to the second mobile device 800 (S330).

The display device 100 controls the volume of the speaker 160 based on reception of the advertising packet and the received signal strength of the advertising packet (S340). The received signal strength indicates a distance between the display device 100 and the second mobile device 800, and as the received signal strength becomes stronger, the distance between the two devices becomes closer. Accordingly, the display device 100 may control the volume of the speaker 160 to be lower as the received signal strength becomes stronger. That is, as a user is located at a closer distance, the volume of the speaker 160 is reduced.

Alternatively, when the display device 100 has previously controlled audio output to a mute state due to non-reception of the advertising packet, the display device 100 may control the speaker 160 to release the mute state.

S330 and S340 may be performed in an order different from that illustrated. That is, S340 may be performed first, and S330 may be performed thereafter.

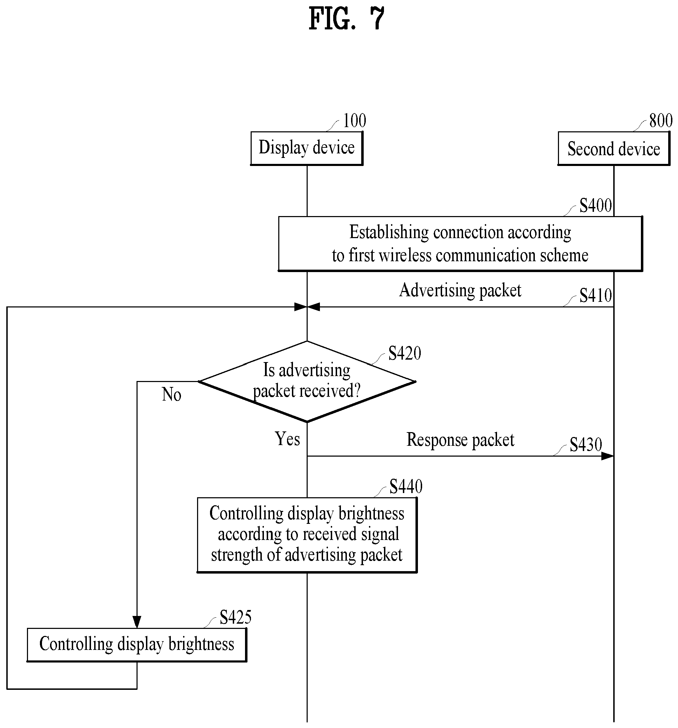

FIG. 7 is a flowchart illustrating controlling a display device through a mobile device according to an embodiment of the present disclosure.

The flowchart of FIG. 7 is assumed to be performed after completion of the procedure illustrated in FIG. 4. However, the procedure illustrated in FIG. 4 is not necessarily required to be performed in advance. In addition, the flowchart of FIG. 7 may be a procedure that is activated when the mode configured in S150 of FIG. 4 is a predetermined mode (for example, an "outdoor mode"). However, the procedure may also be activated even when the operation mode of the display device 100 according to the location information is not the predetermined mode.

In addition, S400 to S430 of FIG. 7 have the same configuration as S300 to S330 of FIG. 6, and thus, in order to avoid repetition of description, description thereof is omitted and reference is made to FIG. 6.

The display device 100 controls the brightness of the display 150 according to a received signal strength of an advertising packet (S440). The received signal strength indicates a distance between the display device 100 and the second mobile device 800, and as the received signal strength becomes stronger, the distance between the two devices becomes closer. Accordingly, the display device 100 may control the brightness of the display 150 to be lower as the received signal strength becomes weaker. That is, as a user is located at a farther distance, the brightness of the display 150 may be reduced in order to reduce consumption of a battery 190 of the display device 100.

Alternatively, when the advertising packet is received, the display device 100 may control the brightness of the display 150 to be maintained.

When the advertising packet is not received, the display device 100 controls the brightness of the display 150 to a predetermined value (S425). The operation is to lower the brightness of the display 150 in order to reduce consumption of the battery 190 of the display device 100 when the user is determined to be located at a far distance from the display device 100.

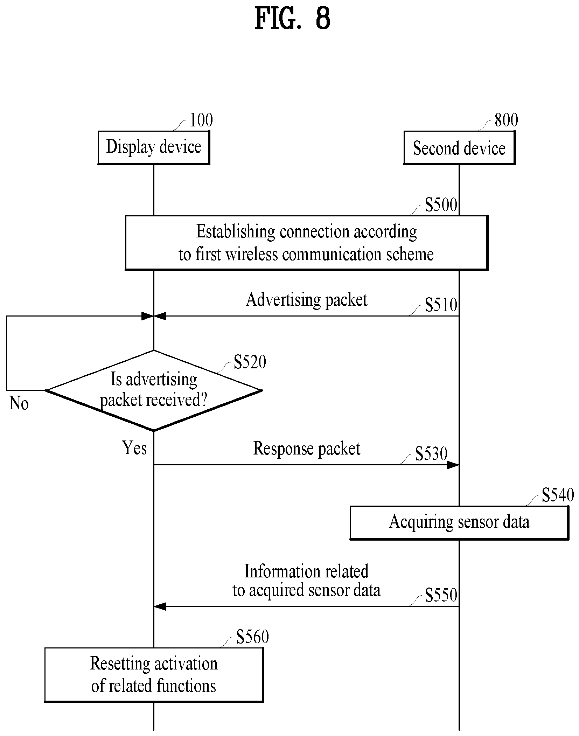

FIG. 8 is a flowchart illustrating controlling a display device through a mobile device according to an embodiment of the present disclosure.

The flowchart of FIG. 8 is assumed to be performed after completion of the procedure illustrated in FIG. 4. However, the procedure illustrated in FIG. 4 is not necessarily required to be performed in advance. In addition, the flowchart of FIG. 8 may be a procedure that is activated when the mode configured in S150 of FIG. 4 is a predetermined mode (for example, an "outdoor mode"). However, the procedure may also be activated even when an operation mode of the display device 100 according to the location information is not a predetermined mode.

In addition, S500 to S530 of FIG. 8 have the same configuration as S300 to S330 of FIG. 6, and thus, in order to avoid repetition of description, description thereof is omitted and reference is made to FIG. 6.

When it is determined that no advertising packet is received, the display device 100 may wait until an advertising packet is properly received.

The second mobile device 800 acquires sensor data (S540). When the second mobile device 800 receives a response packet from the display device 100 (S530), the second mobile device 800 may notify a user of the second mobile device 800 of reception of the response packet through an HMI of the second mobile device 800. Through such notification, the user may perform a motion operation that serves as a basis for the sensor data, and the second mobile device 800 may acquire the sensor data.

Thereafter, the second mobile device 800 transmits information related to the acquired sensor data to the display device 100 (S550).

The display device 100, which has received the information related to the acquired sensor data, resets (that is, deactivates) a function related to display of acquired information described in FIG. 5, a function related to control of the speaker volume described in FIG. 6, and a function related to control of the brightness of the display described in FIG. 7 (S560).

Alternatively, the display device 100 may activate or deactivate the above-mentioned functions in a toggle switch manner in response to reception of the information related to the acquired sensor data. That is, when the acquired sensor data is received for the first time, the display device 100 controls the above-mentioned functions to be deactivated, and when sensor data is subsequently received, the display device 100 controls the above-mentioned functions to be activated.

Alternatively, in response to reception of the information related to the acquired sensor data, the display device 100 may reset or initialize an operation mode based on location information configured in S150 of FIG. 4.

In addition, when the information related to the acquired sensor data is received, the display device 100 may disconnect from the second mobile device 800 according to the first wireless communication scheme.

As described above with reference to FIG. 4, only when the acquired sensor data corresponds to a predefined value, operations corresponding to S550 or S560 may be performed. That is, only when sensor data corresponding to a predefined value (for example, two up-and-down snap motions of a hand) is acquired in S540, transmission and reception of the sensor data in S550 are performed. In addition, only when transmission and reception of the predefined sensor data are performed in S550, the operation of S560 is performed.

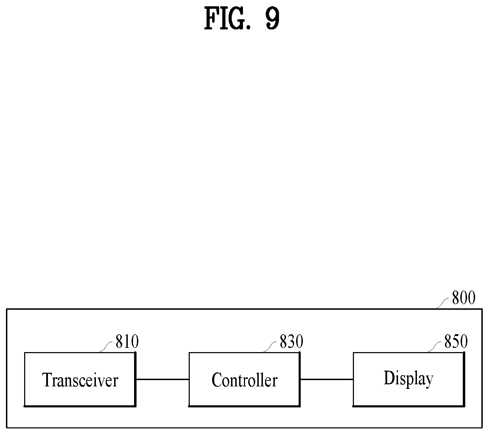

FIG. 9 illustrates a block diagram of the second mobile device 800 according to an embodiment of the present disclosure.

The second mobile device 800 may include a transceiver 810, a controller 830, and a display 850. In addition, the second mobile device 800 may include a speaker, an electromyography sensor, or a vibrator.

The transceiver 810 transmits and receives information, messages, and the like with the first mobile device 700 or the display device 100. The display 850 displays information received from the first mobile device 700 or the display device 100, or information acquired from the electromyography sensor.

The speaker of the second mobile device 800 outputs an audio alarm, and the electromyography sensor of the second mobile device 800 senses motion of a hand of a user and surroundings of the hand and outputs sensing data. The vibrator of the second mobile device 800 outputs a haptic alarm.

The controller 830 controls all components of the second mobile device 800 and controls the second mobile device 800 to perform operations described above with reference to FIGS. 3 to 8.

In another aspect of the present disclosure, the above-described proposals or operations may be provided as code that is capable of being implemented, performed, or executed by computers (herein, the computer is a comprehensive concept including a system on chip (SoC), a processor, a microprocessor etc.) or a computer-readable storage medium or computer program product storing or including the code. The scope of the present disclosure may be extended to the code or the computer-readable storage medium or computer program product storing or including the code.

The preferred embodiments of the present disclosure are provided to allow those skilled in the art to implement and embody the present disclosure. While the present disclosure has been described and illustrated herein with reference to the preferred embodiments thereof, it is understood to those skilled in the art that various modifications and variations could be made therein without departing from the scope of the disclosure. Therefore, the present disclosure is not limited to the embodiments disclosed herein but intends to give the broadest scope consistent with the new principles and features disclosed herein.

## Claims

1. A movable display device configured to output video and audio, the movable display device comprising:
a transceiver configured to transmit and receive data with a mobile device through a wired or wireless connection;
a display configured to output video data or provide a user interface for control commands of audio data, the display comprising a touch screen;
a speaker configured to output the audio data; and
a controller,
wherein the controller is configured to:
receive a connection target scan start request from a first mobile device;
initiate a connection target scan according to the received scan start request; and
establish a connection with a second mobile device according to a first wireless communication scheme based on the connection target scan,
wherein the connection target scan start request is triggered by the second mobile device.

2. The movable display device of claim 1, wherein the controller is configured to:
receive location information from the first mobile device; and
perform a mode configuration according to the received location information.

3. The movable display device of any one of claims 1 and 2, wherein the controller is configured to:
attempt to receive an advertising packet from the second mobile device; and
measure a distance to the second mobile device based on the advertising packet,
wherein the advertising packet is periodically transmitted from the second mobile device.

4. The movable display device of claim 3, wherein, based on the distance to the second mobile device being within a predetermined reference range, the controller is configured to output acquired information through the display or the speaker.

5. The movable display device of claim 1, wherein, based on a distance to the second mobile device being outside a predetermined reference range, the controller is configured to store acquired information in a memory.

6. The movable display device of claim 5, wherein the controller is configured to:
measure the distance to the second mobile device based on a periodically transmitted advertising packet; and
based on the distance to the second mobile device being within a predetermined reference range, output the stored acquired information through the display or the speaker.

7. The movable display device of claim 4, wherein the controller is configured to transmit a response packet to the second mobile device in response to the advertising packet.

8. The movable display device of any one of claims 4 and 6, wherein the controller is configured to initialize the display based on reception of an acknowledgment in response to the output from the second mobile device.

9. The movable display device of claim 3, wherein the controller is configured to control a volume of the speaker according to the measured distance.

10. The movable display device of claim 9, wherein, based on a failure to receive the advertising packet or a received signal strength of the advertising packet being less than a threshold, the controller is configured to control the speaker to a mute state.

11. The movable display device of claim 10, wherein the controller is configured to:
based on the received signal strength of the advertising packet being greater than or equal to the threshold, control the volume of the speaker to a setting value prior to the mute state; or
control the volume of the speaker according to the measured distance based on the received signal strength of the advertising packet.

12. The movable display device of claim 3, wherein the controller is configured to control brightness of the display to a predetermined value according to the measured distance.

13. The movable display device of claim 12, wherein the controller is configured to:
based on a received signal strength of the advertising packet being greater than or equal to a threshold, control the brightness of the display to a setting value prior to the predetermined value; or
control the brightness of the display according to the measured distance based on the received signal strength of the advertising packet.

14. The movable display device of claim 2, wherein, based on reception of a packet including predetermined information from the second mobile device, the controller is configured to initialize or reset the mode configuration.

15. A method for controlling a movable display device configured to output video and audio,
wherein the method is performed by the movable display device comprising:
a transceiver configured to transmit and receive data with a mobile device through a wired or wireless connection;
a display configured to output video data or provide a user interface for control commands of audio data, the display comprising a touch screen;
a speaker configured to output audio data; and
a controller,
the method comprising:
receiving a connection target scan start request from a first mobile device connected according to a first wireless communication scheme;
initiating a connection target scan according to the received scan start request; and
establishing a connection with a second mobile device according to the first wireless communication scheme based on the connection target scan,
wherein the connection target scan start request is triggered by the second mobile device.
